# EUROPEAN PATENT SPECIFICATION

(11) **EP 2 523 587 B1**
(45) Date of publication and mention of the grant of the patent: **02.10.2013**
(21) Application number: 11701039.7
(22) Date of filing: 12.01.2011
(51) Int. Cl.: A47J 31/44

(54) **ERGONOMIC SERVICE UNIT FOR BEVERAGE PREPARATION MACHINES**
ERGONOMISCHE SERVICEEINHEIT FÜR GETRÄNKEHERSTELLUNGSMASCHINEN
UNITÉ DE SERVICE ERGONOMIQUE POUR MACHINES DE PRÉPARATION DE BOISSONS

(30) Priority: 15.01.2010 EP 10150842
(43) Date of publication of application: 21.11.2012
(73) Proprietor: Nestec S.A., 1800 Vevey (CH)
(72) Inventor: MÖRI, Peter, 3272 Walperswil (CH); CAHEN, Antoine, 1005 Lausanne (CH); SCHNYDER, Frank, 1800 Vevey (CH)
(74) Representative: Schnyder, Frank Simon
(86) International application number: PCT/EP2011/050316
(87) International publication number: WO 2011/086087

(56) References cited:
- WO-A1-2009/074559
- WO-A1-2009/130099

## Description

### Field of the Invention

The field of the invention pertains to service units for beverage preparation machines, in particular beverage preparation machines for preparing beverages from a pre-portioned ingredient of the beverage supplied within a capsule to the machine. The service unit may include an arrangement for collecting waste material generated during operation of the beverage preparation machine.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Beverage preparation machines are becoming very popular whether at home or in offices. For instance, there are machines for the preparation of beverages such as coffee, tea, soup or other similar beverages, in which at least one ingredient of the desired beverage, for example ground coffee, is supplied within a capsule into a capsule extraction chamber of the machine.

The ingredient is typically extracted by a liquid, such as water, circulated in the beverage preparation machine from a source of liquid through the capsule extraction chamber. From the extraction chamber, the liquid containing the extracted ingredient is dispensed via a beverage outlet of the machine to a user, e.g. into a user-cup or user-mug appropriately placed underneath the outlet during the beverage preparation process.

The use of capsules, such as plastic and/or aluminium-based capsules, for the preparation of beverages has many advantages. Capsules, in particular aluminium-based capsules, are hermetic or gas tight and thus can protect the beverage ingredient effectively during an extended period of time against the environment such as air, humidity or light, before use of the ingredient. Thus such capsules prevent premature degradation of the ingredient. Furthermore, capsules of a beverage ingredient are easy to handle, hygienic, and their use involves less cleaning of the beverage preparation machine, in particular no significant part of the machine's extraction chamber comes into contact with the beverage ingredient contained in the capsule during the extraction process. Moreover, upon use, any residual waste ingredient is largely confined within the capsule so that generally no loose waste ingredient has to be removed from the beverage preparation machine after use.

Capsules are usually inserted individually into the machine's extraction chamber, manually or automatically from a capsule stack. Hot or cold water is then passed through the capsule for brewing or otherwise extracting the ingredient(s) contained within the capsule and form the desired beverage. The prepared beverage is supplied via an outlet of the machine into a cup, mug or other receptacle to the user.

Suitable brewing units for such capsules are for example disclosed in EP 1 095 605, EP 1 646 305, EP 1 757 212, EP 1 859 713, EP 1 859 714, EP 2 103 236, EP 2 119 385, WO 2009/043630 and WO 2009/130099.

Upon extraction, the used capsules may either be removed individually from the beverage preparation machine after each preparation cycle. Alternatively, the used capsules may be evacuated to a machine's used-capsule receptacle.

The beverage preparation machines are advantageously provided with a service unit for handling waste materials generated during the beverage preparation process. The waste materials include waste ingredients, such as ground coffee after extraction, and/or liquid such as liquid evacuated from the liquid circuit between the liquid source and the beverage outlet or excess beverage dispensed at the beverage outlet, e.g. in the form of drips at the end of a beverage preparation process. For example, the service unit includes a waste liquid collect arrangement with at least one of a: user-recipient support provided with a liquid evacuation arrangement such as a grid; and a waste ingredient holding arrangement. Typically, the user-recipient support and/or the waste ingredient holding arrangement are situated above the waste liquid collect arrangement so that waste liquid may be evacuated by gravity from the user-recipient support and/or the waste ingredient holding arrangement to the waste liquid collect arrangement.

Advantageously, the used-capsule receptacle is located underneath the capsule chamber so that the capsules may fall by gravity into the receptacle upon extraction. In the latter case, the receptacle has to be emptied by the user when full. The receptacle may be a removable receptacle located in the beverage preparation machine typically under the extraction chamber.

Service units of beverage preparation machines are for example disclosed in EP 1 095 605, EP 1 731 065, EP 1 867 260, WO 2009/013778, WO 2009/074559 and WO 2009/135869.

Usually, the beverage preparation machine has a seat for receiving such a service unit. Typically, the seat is located inside the machine's housing and is so configured that the service unit can be slid in an out of the beverage preparation machine.

A problem may arise when the service unit is improperly inserted into the machine or even not inserted at all into the machine. In such a situation, there is a risk that waste ingredient or liquid is improperly collected during the beverage preparation process and generates a mess in the beverage preparation machine.

A known solution to this problem involves the implementation of a sensor for detecting the proper insertion of the service unit into the beverage preparation machine and for electronically blocking the beverage preparation process when the service unit is not properly inserted into the machine. Such electronic sensor and control systems are relatively expensive. Hence, these systems are usually not provided in beverage preparation machines of the entry or the middle commercial range.

There is still a need to provide an inexpensive simple solution for improving the proper, ergonomic and/or fool-proof handling of a service unit of a beverage preparation machine.

### Summary of the Invention

The invention thus relates to a beverage preparation machine that comprises:
a) a seat;
b) a service unit in the seat for storing waste material, the service unit being
   - insertable manually into the seat into a collection position for collecting waste material such as waste liquid and/or waste beverage ingredient, optionally contained in a pre-portioned ingredient capsule; and
   - removable, in particular manually, from the seat for emptying the waste material upon collection thereof in the service unit;
      and
c) a control means for controlling proper insertion of the service unit in the seat.

For instance, the machine is a coffee, tea, chocolate or soup preparation machine, such as a self-contained table-top machine that can be electrically connected to the mains, e.g. at home or in an office. In particular, the machine is arranged for preparing within the ingredient processing arrangement a beverage by passing hot or cold water or another liquid through a capsule containing an ingredient of the beverage to be prepared, such as ground coffee or tea or chocolate or cacao or milk powder.

For example, the preparation machine comprises: an ingredient processing arrangement including one or more of a liquid reservoir, a liquid circulation circuit, a heater, a pump and a beverage preparation unit arranged to receive ingredient capsules for extraction and evacuate capsules upon extraction; a housing having an opening leading into a seat to which capsules are evacuated from the preparation unit; and a receptacle having a cavity forming a storage space for collecting capsules evacuated to the seat into the receptacle up to a level of fill. The receptacle is insertable into the seat for collecting capsules and is removable from the seat for emptying the collected capsules. Examples of such ingredient processing arrangements are disclosed in WO 2009/074550, WO 2009/130099 and PCT/EP09/053139.

The beverage preparation module may include one or more of the following components:
a) a brewing unit for receiving an ingredient of this beverage, in particular a pre-portioned ingredient supplied within a capsule, and for guiding an incoming flow of liquid, such as water, through said ingredient to a beverage outlet;
b) an in-line heater, such as a thermoblock, for heating this flow of liquid to be supplied to the brewing unit;
c) a pump for pumping this liquid through the in-line heater;
d) one or more fluid connecting members for guiding this liquid from a source of liquid, such as a tank of liquid, to the beverage outlet;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the brewing unit, the in-line heater, the pump, a liquid reservoir, an ingredient collector, a flow of this liquid, a pressure of this liquid and a temperature of this liquid, and for communicating such characteristic(s) to the control unit.

The heater may be a thermoblock or an on demand heater (ODH), for instance an ODH type disclosed in EP 1 253 844, EP 1 380 243 and EP 1 809 151.

In accordance with the invention, the above mentioned control means comprises a touch-sensory feed-back mechanism arranged to indicate to a user an improper insertion of the service unit in the seat.

A touch-sensory feed-back mechanism is a user-feed back interface mechanism for communicating to a user an information from the machine. As opposed to the usual interfaces, e.g. visual and/or sound interfaces such as LED's, screens, loudspeakers, etc..., that require the user's visual or auditory attention and focus, the touch-sensory feed-back mechanism of the invention involves a touch mechanism such that the user is communicated an information from the machine by a feed-back directly on the manual movement he/she exerts or endeavours to exert on the machine by relying on his/her sense of touch and force associated therewith.

Hence, the user is informed by a user-perceptible touch-sensory feed-back mechanism if and when the service unit is improperly inserted in the seat, for example when the service unit is not inserted to the full expected extent into the seat. This may be the case when some undesired obstacle, e.g. object such as waste material or another object, is present in the seat and interferes with the insertion of the service unit preventing it to reach the end of the seat during insertion, and/or when the user simply fails to properly push the service unit fully into the collection position.

It follows that, unlike prior art basic service units that can be pushed, e.g. slide, into a machine's seat to hit the rear wall of the seat,-the machine of the invention has a touch-sensory mechanism for indicating to the user that the service unit has been improperly inserted into the machine even when the service unit hits an unwanted obstacle in the course of insertion prior to reaching the proper fully inserted position, i.e. the collection position. Such an unwanted obstacle is thus not mistaken by a user for a rear wall of the seat.

Such a mechanism is highly desirable since improper positioning of the service unit in the machine's seat may lead to malfunctioning of the machine. In particular, waste materials, instead of being fully collected by the service unit may escape between the service unit and the seat, and possibly into the beverage processing unit, to dirty, clog and/or disturb the machine.

In one embodiment, the touch-sensory feed-back mechanism comprises a force feed-back means arranged to vary a manual force required for inserting the service unit into the seat when the service unit is about to reach the collection position during manual insertion.

Hence, during the insertion movement of the service unit into the machine's seat, the user is informed sensitively of the end-of-insertion of the service unit into the seat prior to reaching the fully inserted position of the service unit into the seat. This comforts the user handling the beverage preparation machine during the insertion procedure of the service unit and thus increases its ergonomics. Moreover, this contributes to inhibit improper insertion of the service unit into the seat.

The force feed-back means may comprise an arrangement for generating an insertion force assistance when the service unit is about to reach the collection position, in particular an arrangement for automatically positioning the service unit into the collection position. For instance, the force feed-back means comprises a magnet-based and/or a spring-based mechanism. For example, the force feed-back means includes one or more magnets secured to the seat and/or to the service unit, the magnet(s) generating a force causing a variation of the required manual force for inserting the service unit, the generated force assisting in particular reaching the collection position by the service unit.

It follows that a user who does not feel the force assistance towards the end of the insertion movement understands via his/her sense of touch that the service unit has not fully reached its collecting position.

The force feed-back means can comprise an arrangement for generating a mechanical hard-point with a sudden release when the service unit reaches the collecting position. The mechanical hard-point arrangement may include a spring-based mechanism. For instance, the arrangement is a reversible clip-based or snap-based arrangement. The mechanical hard-point arrangement can comprise a friction-based mechanism, for example a mechanism generating an increasing friction resistance against towards the end of the insertion movement of the service unit with a generally friction-free short very end-portion of this insertion movement, thereby forming a "hard point".

Likewise, it follows that a user who does not feel a "hard point" towards the end of the insertion movement understands via his/her sense of touch that the service unit has not fully reached its collecting position.

Typically, the service unit is arranged to be slidable into and out from the seat. A bottom face of the service unit may slide on a bottom part of the seat with or without the assistance of guides and/or rails. It is also possible to provide a generally friction-fee relative movement between the service unit and the seat, e.g. using wheels or gears.

Normally, the service unit comprises an arrangement for collecting at least one of:
- waste beverage precursor-liquid, such as water;
- waste beverage precursor-solid, such as a used beverage flavouring ingredient in particular ground coffee, optionally contained in a pre-portioned capsule; and
- waste beverage, such as drips from a beverage dispensing outlet or draining from an ingredient chamber of an ingredient processing unit upon reopening after processing.

Examples of service units providing such collecting features are disclosed in EP 1 095 605, EP 1 731 065, EP 1 867 260, WO 2009/135869 and WO 2009/074559, the contents of which are hereby incorporated by way of reference.

For instance, the service unit has a liquid collection receptacle and a solid ingredient collection receptacle, in particular a receptacle for used ingredient capsules. The service unit may comprise a support for user-cups and/or user-mugs, the support being in particular arranged to evacuate beverage drips to a liquid collection receptacle.

Typically, the beverage preparation machine has an ingredient processing unit that has a chamber and that has: an open configuration for insertion of the ingredient into the chamber and removal of the ingredient from the chamber; and a closed configuration for preparing a beverage by processing the ingredient in the chamber, the processing unit or a part thereof being movable, in particular manually, from the open to the closed configuration and vice versa.

The beverage preparation machine may include a mechanical locking arrangement for mechanically preventing preparation of any beverage when the service unit is not in the collection position.

The mechanical locking arrangement may be configured to prevent closure of the processing unit when the service unit is not in the collection position.

In particular, when the processing unit or the said part thereof is manually movable between the closed and the opened configurations, a further embodiment of the invention may be achieved as follows: the touch-sensory feed-back mechanism may comprise the mechanical locking arrangement which blocks manual closure of the processing unit when the service unit is not in the collection position.

It follows that a user who feels the resistance against closure of the ingredient chamber understands via his/her sense of touch that the service unit may not have fully reached its collecting position.

The beverage preparation machine may also include a mechanical locking arrangement that is configured to prevent removal of the service unit when the processing unit is in its closed configuration, in particular when the processing unit is not in its open configuration.

Hence, before the service unit is withdrawn from the seat, the user may be invited to make sure that the ingredient chamber is emptied before emptying the service unit, in particular that no capsule remains in the ingredient chamber and that the last used capsule has been properly evacuated to the service unit. To avoid clogging of the service unit, in particular with used ingredient capsules, the service unit may incorporate an anti-clogging system, for example as disclosed in WO 2009/074559 and in WO 2009/135869, the contents of which are hereby incorporated by way of reference.

The locking arrangement may be of the type known in the field of cabinets with several drawers so configured that the ability to move one drawer depends on the position of other drawers. This kind of technology is well known in the field of office and home furniture for storing documents, clothes and other items, for example as disclosed in US 4,960,309, US 5,056,876, etc.... This type of locking arrangement can be adapted and transferred to the field of beverage preparation machines. In the context of the present invention, the prior art openable and closable drawers are notionally substituted by the openable and closable processing unit and by the insertable and removable service unit. Of course, other configurations of the same type can provide this locking functionality.

In particular, the locking arrangement may include one or more locking devices acting on the beverage preparation arrangement, e.g. on the liquid circuit extending from a liquid source to a beverage outlet in particular on an infusion chamber such as a chamber contained in a brewing unit, and on the service unit. When the service unit and the beverage preparation arrangement are associated with different locking devices, they should be coordinated so that locking the beverage preparation arrangement frees the service unit and/or vice versa.

In an advantageous embodiment, the locking arrangement comprises a locking element cooperating with the beverage preparation arrangement and the service unit so that when the service unit is locked in the seat, the beverage preparation arrangement may be operated to prepare a beverage and when the beverage preparation arrangement is locked to prevent preparation of a beverage, the service unit may be removed from the corresponding seat of the beverage preparation machine.

Such a locking element may comprise a bolt slidable between the beverage preparation arrangement, e.g. the openable processing unit, and the service unit to block selectively the beverage preparation arrangement and the removability of the service unit. The locking element can include a cam-follower, e.g. a pin, that follows a first cam in the beverage preparation arrangement, e.g. the openable processing unit, and a second cam, e.g. a pin, in the service unit, so that movements of the service unit cause the beverage preparation arrangement to be locked and unlocked, respectively, by the locking element, and vice versa.

The locking arrangement may of course be combined with the previously mentioned embodiments of the touch-sensory feed-back mechanism.

### Brief Description of the Drawings

The invention will now be described with reference to the schematic drawings, wherein:
- Figure 1 is an overall view of a beverage preparation machine according to the invention;
- Figure 2 is an overall view of a similar beverage preparation machine according to the invention;
- Figure 3 is a perspective view of part of a service unit of a beverage preparation machine according to the invention, Figure 4 showing an enlarged view of a detail of Fig. 3;
- Figures 5a to 5c schematically illustrate side views of different positions of a service unit and an ingredient chamber of a beverage preparation machine according to the invention; and
- Figures 6a to 6c schematically illustrate front views of a locking element of the beverage preparation machine shown in Figs 5a to 5c in the corresponding configurations.

### Detailed description

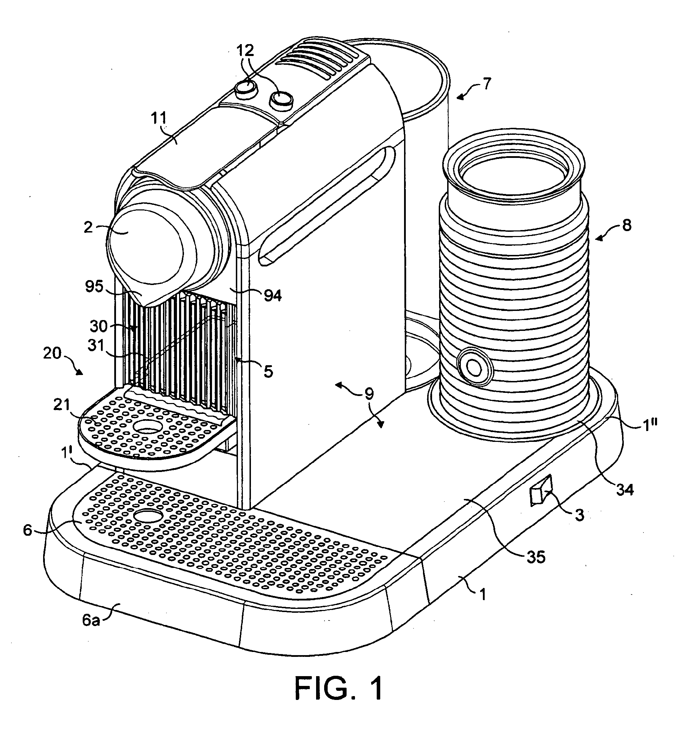

Figure 1 shows a beverage preparation machine according to the invention. The machine has a beverage preparation unit 2 in a housing 9. Unit 2 is arranged for receiving an ingredient capsule in an extraction chamber and for feeding a liquid such as water to the capsule. Unit 2 is mounted on a platform 1 and extends along a lateral side 1' thereof. A beverage outlet 95 for dispensing beverage from unit 2 extends through a front face 94 of housing 9.

Unit 2 includes a brewing module that comprises an opening and closure handle 11 and a holding means (not shown) for holding the substance-containing capsule, e.g., a coffee capsule, and a beverage delivery means such as a beverage duct 95. The holding means typically comprises a capsule holder and a brewing cage delimiting the extraction chamber, a fluid injection system for injecting water in the capsule and a closure device such as a lever and a knee joint mechanism. Suitable extraction modules are for example described in EP 1 859 713. Further possible features of unit 2 are discussed in greater details in co-pending application EP 2 070 454, the content of which is hereby incorporated by way of reference.

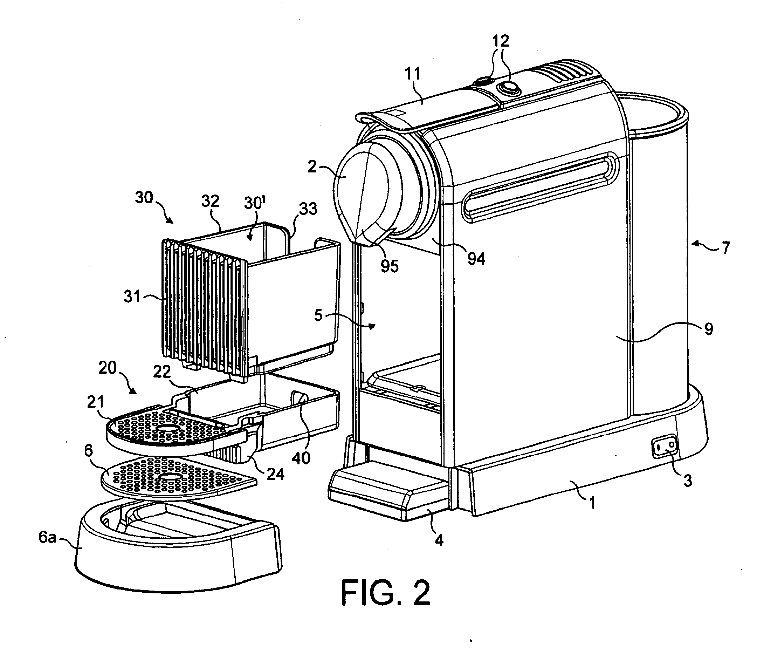

Furthermore, housing 9 houses within a seat 5 a service unit 20,30 for collecting waste materials such as waste liquid and/or a waste beverage ingredient. Service unit 20,30 is manually insertable into seat 5 to reach a collection position for collecting waste materials (as shown in Fig. 1); and removable from seat 5 for emptying the waste materials upon collection thereof (as shown in Fig. 2). Service unit 20,30 may slide into and out from seat 5.

This service unit includes a used capsule receptacle 30 that has a front face 31 and that is removably inserted under the brewing unit and outlet 95. Receptacle 30 and its seat in housing 9 will be discussed in greater details in relation with Figs 2 to 6c.

Platform 1 bears beverage unit 2, a water tank 7 attached to the base platform externally to housing 9 and adjacent to the rear wall of housing 9, a fluid connection therebetween, and an electric power connection to the mains.

A master switch 3 is mounted on platform 1 for shutting on and off the machine. Two user-buttons 12, typically for selecting a small or large quantity of beverage to be prepared, are located above unit 2.

Upper face 34 of platform 1 has means in the form of a STRIX™ connector (not shown) for connecting a milk frothing device 8. Such disconnectable connectors for such a platform 1 and frothing device 8 are for example disclosed in greater detail in WO 03/075629, WO 2008/046837 and in WO 2008/142154, the contents of which are hereby incorporated by way of reference.

Upper face 34 is adjacent neighbouring front face 35 that can be associated with a heating system, in particular integrated in platform 1, and that may be arranged to support one or more cups or mugs for preheating thereof prior to use.

As mentioned above, beverage unit 2 generally extends upwards within housing 9 adjacent a first lateral edge 1' of platform 1. Frothing device 8 is generally located adjacent a second lateral edge of platform 1 opposite the first edge 1'', so that housing 9 and platform 1 generally form in cross-section an L-shape that supports frothing device 8.

The beverage preparation machine also includes a support device 6 for supporting mugs that is located under beverage outlet 95 and that is in the shape of a perforated plate for evacuating liquid. A collector 6a in the form of a shallow reservoir is located underneath support device 6 for collecting the evacuated liquid. Collector 6a does not require a high capacity for collecting liquid. Most of the time, collector 6a will only have to collect drips and spills.

Support device 6 and collector 6a are separable en bloc from platform 1, for instance for emptying collector 6a and/or for cleaning.

Furthermore, service unit 20,30 has a cup support device 20 that includes, above support device 6, a second support plate 21 for supporting recipients, such as cups, of smaller size underneath outlet 95. Like main support device 6, second support plate 21 comprises a perforated plate for the evacuation of liquid, in particular to collector 6a, optionally via support device 6. Second support plate 21 is movable into a generally horizontal operative position between the outlet 95 and support device 6, as illustrated, and is movable into a generally upright or vertical rest position away therefrom so that a larger recipient is placeable on support device 6 under outlet 95. Second support plate 21 is in particular rotatable and/or slidable from its operative position into its rest position. Further details of possible features of such second support device are for example disclosed in EP 1 867 260.

Figure 2, in which the same numeric references generally designate the same elements, generally shows another beverage preparation machine according to the invention.

The preparation machine shown in Fig. 2 has the same features as the machine of Fig. 1 except for the absence of the lateral platform extension supporting a milk frothing device.

This machine has a seat 5 for receiving service unit 20,30 that includes cup support device 20 which bears receptacle 30 having a cavity 30' that forms a storage space for collecting used capsules underneath the brewing unit with the extraction chamber.

Receptacle 30 may be assembled to cup support device 20 which includes cup support member 21 that is pivotally mounted onto a reservoir 22 supporting receptacle 30. Support member 21 is assembled to or integral with a stop member 24 that is rotatable with support member against a front face of reservoir 22 to stop the downward rotation of support member 21 and secure member 21 in a horizontal position.

Receptacle 30 may have a bottom part with a drain-hole so that reservoir 22 can collect liquid drained from this bottom part into reservoir 22 via the drain-hole. Cup support device 20 and receptacle 30 resting thereon may be inserted and removed en bloc from seat 5.

Furthermore, receptacle 30 has an opening 33 in the rear upright wall that is used to prevent clogging by an accumulation of used capsules, as described in greater details WO 2009/074559, which is hereby incorporated by way of reference.

Also shown in Fig. 2, collector 6a supporting support device 6 may be removably assembled via a mechanical connector 4 to platform 1.

The beverage preparation machines shown in Figs 1 and 2 have a control means for controlling proper insertion of the service unit 20,30 in seat 5. In accordance with the invention, the control means comprises a touch-sensory force feed-back mechanism 40 arranged to vary a manual force required for inserting service unit 20,30 into seat 5 when service unit 20,30 is about to reach the collection position during manual insertion.

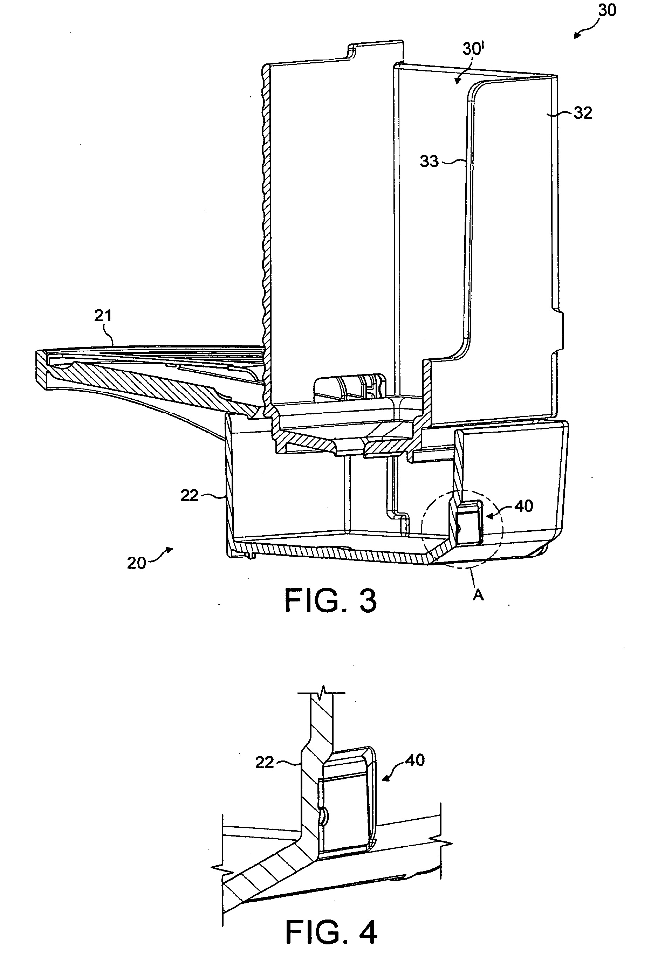

Further details and variations of service unit 20,30 and seat 5 are now discussed in relation with Figures 3 to 6c.

Service unit 20,30 comprises an arrangement for collecting: waste beverage precursor-liquid, such as water, in reservoir 22; waste beverage precursor-solid, such as a used beverage flavouring ingredient in particular ground coffee, optionally contained in a pre-portioned capsule, in used ingredient receptacle 30; and waste beverage, such as drips from a beverage dispensing outlet in reservoir 22 via a liquid evacuation groove arrangement in cup support 21.

On this latter aspect, Fig. 3 illustrates a variation of the service unit shown in Figs 1 and 2. Indeed, cup support 21 of Figs 1 and 2 has a perforation for allowing drips to pass through support 21 and be collected in collector 6a. In Fig. 3, cup support 21 guides liquid into reservoir 22 of service unit 20,30.

In particular, Fig. 3 is a perspective view of part of a service unit 20,30 of a beverage preparation machine according to the invention. Fig. 4 shows a magnified view of detail A of Fig. 3.

The force feed-back means will now be described in greater details. The illustrated beverage preparation has an arrangement for generating a force insertion assistance when service unit 20,30 is about to reach the collection position in seat 5, in particular an arrangement for automatically positioning service unit 20,30 into the collection position underneath the brewing unit.

The force feed-back means comprises a magnet-based mechanism. More specifically, service unit 20,30 bears on its rear face a magnet 40. Magnet 40 protrudes generally vertically from service unit 20,30 and extends rearwards. To cooperate with magnet 40, beverage preparation machine has in or adjacent to seat 5 a ferromagnetic member (not shown). This ferromagnetic member may be formed as or part of a slot or groove in a rear wall of seat 5, such as to be able to receive magnet 40. Alternatively, ferromagnetic member may form the seat's rear wall or part thereof that faces the service unit's rear face bearing magnet 40.

Hence, when magnet 40 approaches the ferromagnetic element, a magnetic force is formed therebetween assisting insertion of service unit 20,30 into its collection position at the end of the insertion movement. Hence, a user manually inserting service unit 20,30 will feel the attraction of service unit 20,30 into the seat and the magnetically driven automatic positioning of service unit 20,30 into its operative collection position. This feeling will indicate to the user that service unit 20,30 has reached its normal destination.

In a variation, it is possible to invert the magnet and the ferromagnetic element or to provide a pair of mutually attracting magnets. In a further variation, it is possible to provide a spring-based mechanism with a spring element that relaxes to bring the service unit into its operative position. Conversely, instead of merely assisting insertion of the service unit into its operative position in the beverage preparation machine, it is possible to provide a mechanical "hard point" system, e.g. a spring based mechanism and/or a friction-based mechanism, which the user will have to overcome when the service unit is manually inserted into the seat.

All these mechanisms will generate a force feed-back that will be physically felt by a user who manually inserts the service unit into the beverage preparation machine and will let him/her know of the proper insertion of the service unit into its operative position.

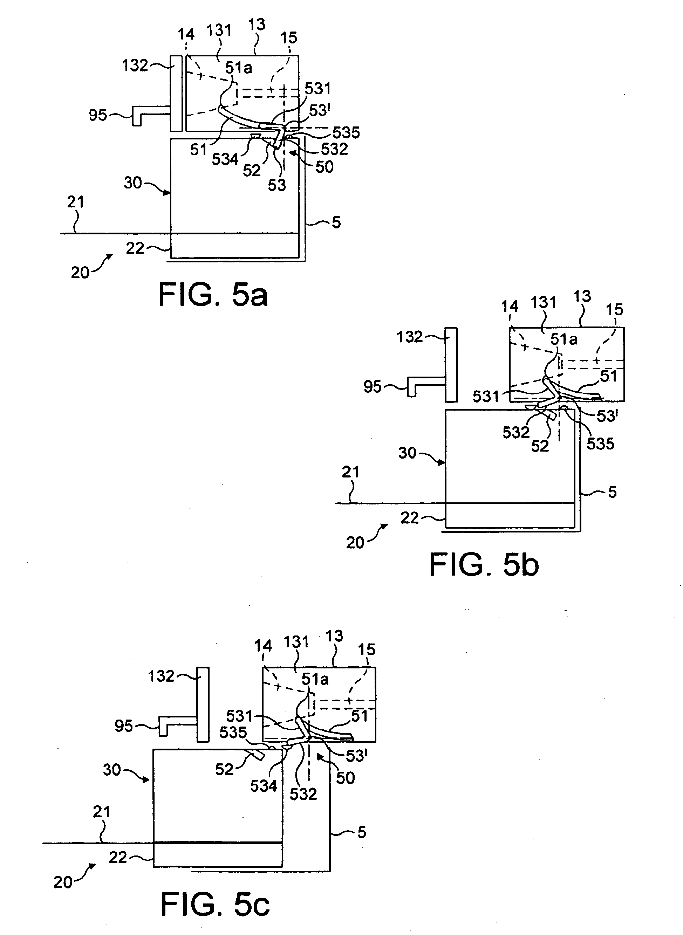

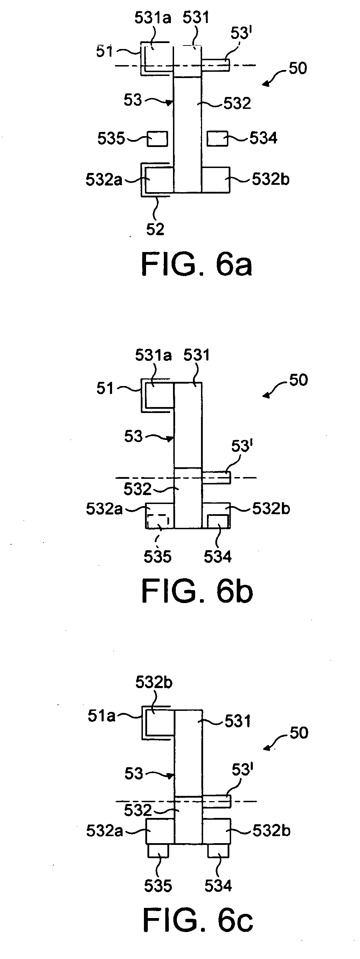

Figs 5a to 6c illustrate a further embodiment of the beverage preparation machine according to the invention which may be combined with the features of the beverage preparation machines illustrated in Figs 1 to 4. In particular, Figs 6a to 6c show a front view of cam-follower 53 in each position of follower 53 illustrated in Figs 5a to 5c, respectively, in combination with a service unit 20,30 and a brewing unit 13 with an extraction chamber 14.

The beverage preparation machine has a brewing unit 13 with a front part 132 and a rear part 131 delimiting an ingredient chamber 14 for accommodating ingredient capsules. Chamber 14 is in fluid connection with a liquid injection line 15 and a beverage outlet 95. Ingredient chamber 14 has an open configuration, as illustrated in Figs 5b and 5c and a closed configuration as shown in Fig. 5a. Chamber 14 is opened and closed by moving apart and together front part 132 and rear part 131 of brewing unit 13. Brewing unit 13 may be opened and closed manually via a handle 11, as illustrated in Figs 1 and 2.

Such a brewing unit opening and closing mechanism together with the insertion, extraction and removal of ingredient capsules is described in greater details for example in EP 1 646 305, EP 1 757 212, EP 1 859 713, EP 1 859 714, EP 2 103 236, EP 2 119 385, WO 2009/043630 and WO 2009/130099, the contents of which are incorporated by way of reference.

Furthermore, the illustrated beverage preparation machine comprises a mechanical locking arrangement 50 for mechanically preventing preparation of any beverage when service unit 20,30 is not in the collection position. In particular, mechanical locking arrangement 50 may be configured to prevent: closure of ingredient chamber 14 when service unit 20,30 is not in the collection position as illustrated in Fig. 5c; and/or removal of service unit 20,30 when ingredient chamber 14 is not in its open configuration, as illustrated in Fig. 5a.

When brewing unit 13 is opened and closed manually with a handle, locking arrangement 50 will block or release the brewing unit and the handle depending on the position of service unit 20,30, providing a touch-sensory feed-back mechanism, in accordance with the invention.

Mechanical locking arrangement 50 comprises a first cam 51, e.g. a groove, associated with movable rear part 131 of brewing unit 13, a second cam 52, e.g. a groove, associated with service unit 20,30 and a locking element 53 configured as a cam-follower associated with cams 51,52. Locking element 53 has a pair or connected arms 531,532 pivotable about an axis 53' in seat 5. Each arm 531,532 has a member 531a,532a, e.g. generally in the form of pins, engaging with cams 51,52, e.g. in the form of grooves cooperating with such pins. Pivoting axis 53' cooperates with a generally oblong holding opening (not shown) in seat 5 of the beverage preparation machine, to permit pivoting of element 53 about axis 53' and small generally horizontal translation of axis 53'.

Figs 5a and 6a illustrate locking arrangement 50 when extraction chamber 14 is in the closed configuration, i.e. front and rear parts 131,132 of brewing unit 13 are urged together. In this configuration, the beverage preparation machine is ready to prepare a beverage, providing a capsule is present in extraction chamber 14. In such a configuration, service unit 20,30 should not be removed from seat 5. To prevent such a removal, locking element 53 has its arm 532 with member 532a fully engaged with cam 52 associated with service unit 20,30. If a user pulls on service unit 20,30, locking element 53 that has its other arm 531 with member 531a engaged in cam 51 and its pivoting axis 53' engaged in the corresponding opening in seat 5, will prevent removal or service unit 20,30 since locking element 53 will be prevented from pivoting.

Figs 5b and 6b illustrate extraction chamber 14 in its opened configuration, i.e. front and rear parts 131,132 of brewing unit 13 are spaced apart. In this configuration, the beverage preparation machine is not in a state of readiness for preparing a beverage. In such a configuration, it is possible to insert a capsule into brewing chamber 14 or remove a capsule therefrom. Moreover, in this inoperative configuration, service unit 20,30 can be removed from seat 5. Hence, locking element 53 has its arm 531 with member 531a driven upwards cam 51 associated with brewing unit 13. Moreover, arm 532 with member 532a are disengaged from cam 52 associated with service unit 20,30. If a user pulls on service unit 20,30, locking element 53 does not block anymore removal of unit 20,30 from seat 5. In this case, locking arrangement 50 is moved to the configuration shown in Figs 5c and 6c.

Conversely, if instead of pulling service unit 20,30 out of seat 5, rear part 131 of brewing unit 13 is moved to front part, locking element 53 is pivoted about axis 53' with its arm 532 and member 532a re-engaging with cam 52 of service unit 20,30 towards the configuration illustrated in Figs 5a and 6a.

Figs 5c and 6c illustrate the removal of service unit 20,30 while extraction chamber 14 is blocked in its opened configuration, i.e. front and rear parts 131,132 of brewing unit 13 are spaced apart and prevented from being brought together. In this configuration, the beverage preparation machine is not in a state of readiness for preparing a beverage but in a state of servicing, e.g. emptying collected water and solid ingredient material such as ground coffee from service unit 20,30.

In this configuration, locking element 53 has been brought in a blocking position to prevent closure of brewing chamber 14. Arm 531 with member 531a are driven upwards cam 51 to a locking end 51a thereof. Locking end 51a extends generally upwardly in cam 51 and exhibits a change of direction. Moreover, Arm 532 has a securing member 532b opposite member 532a. Securing member 532b is secured on and against a support surface 534 of seat 5. To drive securing member 532b onto support surface 534, service unit 20,30 has a drive member 535, e.g. protrusion, which guides locking element 53 via arm 532 at the passage of drive member 535 when service unit 20,30 is pulled out from seat 5. By driving arm 532 onto support surface 534, pivoting axis 53', is slightly displaced towards the front with drive member 535. In this configuration, locking element 53 is locked between support surface 534, locking end 51a and the oblong opening in seat 5 for receiving axis 53'. In particular, locking element 53 is prevented from pivoting counterclockwise which blocks open rear part 131 of brewing unit 13, thus preventing beverage preparation upon removal of service unit 20,30 from its normal operative position in seat 5.

When service unit 20,30 is inserted back into its operative position, drive member 535 of service unit 20,30, comes into contact with member 532a of locking element 53 and pushes member 532b off support surface 534 into the configuration shown in Figs 5b and 6b. In order to permit such a disengagement, the upper end of drive member 535 is slightly higher than the bottom end of member 532a when member 532b is resting on support surface 534. Hence, drive member 535 is used to secure and un-secure locking element 53 in both directions when passing under locking element 53.

In its secured position, as shown in Figs 5c and 6c, locking element 53 may be placed loose between locking end 51a, support surface 534 and the oblong opening in seat 5 for holding axis 53', or locking element 53 may be urged therebetween so as to properly secure member 53 in this position in case the beverage preparation machine is moved while service unit 20,30 is removed. When the locking element 53 is configured to be urged in this position, at least one or both arms 531,532 may be made slightly resilient.

In a variation, it is of course possible to provide this type of configuration with a brewing unit in which the front part is moved to and away from the rear part in order to open and close the brewing chamber, for instance as taught in WO 2009/043630. In this case, the locking element follows a cam associated with the movable front part of the brewing unit.

## Claims

1. A beverage preparation machine comprising:
a) a seat (5);
b) a service unit (20,30) in the seat for storing waste material, the service unit being
- insertable manually into the seat into a collection position for collecting waste material such as waste liquid and/or waste beverage ingredient, optionally contained in a pre-portioned ingredient capsule; and
- removable, in particular manually, from the seat for emptying the waste material upon collection thereof in the service unit,
and
c) a control means for controlling proper insertion of the service unit in the seat,
**characterised in that** the control means comprises a touch-sensory feed-back mechanism (40,50) arranged to indicate to a user an improper insertion of the service unit in the seat.

2. The machine of claim 1, wherein the touch-sensory feed-back mechanism comprises a force feed-back means (40) arranged to vary a manual force required for inserting the service unit (20,30) into the seat (5) when the service unit is about to reach the collection position during manual insertion.

3. The machine of claim 2, wherein the force feed-back means comprises an arrangement (40) for generating an insertion force assistance when the service unit (20,30) is about to reach the collection position, in particular an arrangement for automatically positioning the service unit into the collection position.

4. The machine of claim 3, wherein the force feed-back means comprises a magnet-based mechanism (40) and/or a spring-based mechanism.

5. The machine of any one of claims 2 to 4, wherein the force feed-back means comprises an arrangement for generating a mechanical hard-point with a sudden release when the service unit reaches the collecting position.

6. The machine of claim 5, wherein the mechanical hard-point arrangement comprises a spring-based and/or friction-based mechanism.

7. The machine of any preceding claim, wherein the service unit (20,30) is arranged to be slidable into and out from the seat (5).

8. The machine of any preceding claim, wherein the service unit (20,30) comprises an arrangement (21,22,32) for collecting at least one of:
- waste beverage precursor-liquid, such as water;
- waste beverage precursor-solid, such as a used beverage flavouring ingredient in particular ground coffee, optionally a pre-portioned precursor-solid contained in a capsule; and
- waste beverage, such as drips from a beverage dispensing outlet (95) or draining from an ingredient chamber of an ingredient processing unit upon reopening after processing.

9. The machine of claim 8, wherein the service unit (20,30) comprises a liquid collection receptacle (22) and a solid ingredient collection receptacle (32), in particular a receptacle for used ingredient capsules.

10. The machine of claim 8 or 9, wherein the service unit (20,30) comprises a support (21) for user-cups and/or user-mugs, the support being in particular arranged to evacuate beverage drips to a liquid collection receptacle (22).

11. The machine of any preceding claim, which comprises an ingredient processing unit (13) that has a chamber (14) and that has: an open configuration for insertion of said ingredient into the chamber and removal of said ingredient from the chamber; and a closed configuration for preparing a beverage by processing said ingredient in the chamber, the processing unit or a part thereof being movable, in particular manually, from the open to the closed configuration and vice versa.

12. The machine of any preceding claim, which comprises a mechanical locking arrangement (50) for mechanically preventing preparation of any beverage when the service unit (20,30) is not in the collection position.

13. The machine of claim 12 when depending on claim 11, wherein the mechanical locking arrangement (50) is configured to prevent closure of the processing unit (13) when the service unit (20,30) is not in the collection position.

14. The machine of claim 13, wherein said processing unit or said part thereof is manually movable, said touch-sensory feed-back mechanism (40,50) comprising the mechanical locking arrangement (50) preventing manual closure of the processing unit (13) when the service unit (20,30) is not in the collection position.

15. The machine of any one of claims 11 to 14, which comprises a mechanical locking arrangement (50) configured to prevent removal of the service unit (20,30) when the processing unit (13) is in its closed configuration, in particular when the processing unit is not in its open configuration.

## Patentansprüche

1. Getränkezubereitungsmaschine mit:
a) einer Aufnahme (5);
b) einer Serviceeinheit (20, 30) in der Aufnahme zur Unterbringung von Abfall, wobei die Serviceeinheit
- in einer Sammelposition manuell in die Aufnahme eingeschoben werden kann, um Abfall, wie z.B. Flüssigkeitsabfall und/oder Abfall von Getränkezutaten, zu sammeln, der wahlweise in einer vorportionierten Zutatenkapsel enthalten ist; und
- insbesondere manuell aus der Ausnahme herausgenommen werden kann, um den Abfall, nachdem er in der Serviceeinheit gesammelt wurde, auszuleeren,
und
c) ein Steuerelement zur Steuerung des richtigen Einschubs der Serviceeinheit in die Aufnahme,
**dadurch gekennzeichnet, dass** das Steuerelement einen berührungssensorischen Feedback-Mechanismus (40, 50) aufweist, der einem Benutzer einen falschen Einschub der Serviceeinheit in die Aufnahme anzeigt.

2. Maschine nach Anspruch 1, wobei der berührungssensorische Feedback-Mechanismus ein Kraftrückkopplungselement (40) aufweist, um eine manuelle Kraft zu variieren, die erforderlich ist, um die Serviceeinheit (20, 30) in die Aufnahme (5) einzuschieben, wenn die Serviceeinheit während des manuellen Einschubs die Sammelposition erreicht.

3. Maschine nach Anspruch 2, wobei das Kraftrückkopplungselement eine Anordnung (40) aufweist, um eine Einschubkraftunterstützung zu erzeugen, wenn die Serviceeinheit (20, 30) die Sammelposition erreicht, insbesondere eine Anordnung zur automatischen Positionierung der Serviceeinheit (20, 30) in der Sammelposition.

4. Maschine nach Anspruch 3, wobei das Kraftrückkopplungselement einen, auf einem Magneten basierenden Mechanismus (40) und/oder einen auf einer Feder basierenden Mechanismus aufweist.

5. Maschine nach einem der Ansprüche 2 bis 4, wobei das Kraftrückkopplungselement eine Anordnung aufweist, um einen mechanischen harten Punkt bzw. Druckpunkt zu erzeugen, mit plötzlicher Freigabe, wenn die Serviceeinheit die Sammelposition erreicht.

6. Maschine nach Anspruch 5, wobei die Anordnung des mechanischen harten Punktes bzw. Druckpunktes einen Mechanismus auf Basis einer Feder und/oder einen auf Reibung basierenden Mechanismus aufweist.

7. Maschine nach einem der vorhergehenden Ansprüche, wobei die Serviceeinheit (20, 30) in die Aufnahme (5) hineingeschoben- und aus ihr herausgeschoben werden kann.

8. Maschine nach einem der vorhergehenden Ansprüche, wobei die Serviceeinheit (20, 30) eine Anordnung (21, 22, 32) zum Sammeln von mindestens folgendem aufweist:
- Vorstufen-Flüssigkeit des Getränkeabfalles, wie z.B. Wasser;
- Vorstufen-Feststoff des Getränkeabfalles, wie z.B. eine verwendete Getränke-Geschmackszutat, insbesondere Kaffeemehl, wahlweise ein vorportionierter Vorstufen-Feststoff, der in einer Kapsel enthalten ist; und
- Getränkeabfall, wie z.B. Tropfen aus einem Getränkeabgabeaustritt (95) oder Ablauf aus einer Zutatenkammer einer Zutaten-Aufbereitungseinheit bei erneutem Öffnen nach der Aufbereitung.

9. Maschine nach Anspruch 8, wobei die Serviceeinheit (20, 30) einen Flüssigkeits-Aufnahmebehälter (22) und einen Sammelbehälter für feste Zutaten (32), insbesondere einen Behälter für benutzte Zutatenkapseln, aufweist.

10. Maschine nach Anspruch 8 oder 9, wobei die Serviceeinheit (20, 30) eine Auflage (21) für Tassen und/oder Becher des Benutzers aufweist, wobei die Auflage insbesondere Getränketropfen in einen Flüssigkeitssammelbehälter (22) ableitet.

11. Maschine nach einem der vorhergehenden Ansprüche, die eine Zutatenaufbereitungseinheit (13) aufweist, die eine Kammer (14) besitzt, und die folgendes aufweist: eine offene Konfiguration zum Einschieben der Zutat in die Kammer und Entfernen der Zutat aus der Kammer, und eine geschlossene Konfiguration für die Zubereitung eines Getränkes durch Aufbereiten der Zutat in der Kammer, wobei die Aufbereitungseinheit oder ein Teil davon von der offenen zu der geschlossenen Konfiguration und umgekehrt, insbesondere manuell, beweglich ist.

12. Maschine nach einem der vorhergehenden Ansprüche, die eine mechanische Verriegelungsanordnung (50) aufweist, um die Zubereitung eines Getränkes mechanisch zu verhindern, wenn sich die Serviceeinheit (20, 30) nicht in der Sammelposition befindet.

13. Maschine nach Anspruch 12, wenn er von Anspruch 11 abhängt, wobei die mechanische Verriegelungsanordnung (50) so konfiguriert ist, dass sie ein Verschließen der Aufbereitungseinheit (13) verhindert, wenn sich die Serviceeinheit (20, 30) nicht in der Sammelposition befindet.

14. Maschine nach Anspruch 13, wobei die Aufbereitungseinheit oder ein Teil davon manuell verschiebbar ist, wobei der berührungssensorische Feedback-Mechanismus (40, 50), der die mechanische Verriegelungsanordnung (50) aufweist, ein manuelles Verschließen der Aufbereitungseinheit (13) verhindert, wenn sich die Serviceeinheit (20, 30) nicht in der Sammelposition befindet.

15. Maschine nach einem der Ansprüche 11 bis 14, die eine mechanische Verriegelungsanordnung (50) aufweist, um das Entfernen der Serviceeinheit (20, 30) zu verhindern, wenn sich die Aufbereitungseinheit (13) in ihrer geschlossenen Konfiguration befindet, insbesondere wenn sich die Aufbereitungseinheit (13) nicht in ihrer offenen Konfiguration befindet.

## Revendications

1. Une machine de préparation de boisson comprenant :
a) un siège (5) ;
b) une unité de service (20, 30) dans le siège pour le stockage des déchets, l'unité de service pouvant être
- insérée manuellement dans le siège dans une position de collecte pour collecter les déchets tel que les déchets liquides et/ou les déchets des ingrédients de boisson, contenus éventuellement dans une capsule d'ingrédients pré-proportionnés ; et
- démontée, en particulier manuellement, du siège pour vider les déchets dès la collecte de ces derniers dans l'unité de service,
et
c) un moyen de commande pour commander l'insertion correcte de l'unité de service dans le siège,
**caractérisée en ce que** le moyen de commande comprend un mécanisme de rétroaction sensorielle tactile (40, 50) agencé pour indiquer à l'utilisateur une insertion incorrecte de l'unité de service dans le siège.

2. La machine selon la revendication 1, dans laquelle le mécanisme de rétroaction sensorielle tactile comprend un moyen de rétroaction par force (40) agencé pour faire varier la force manuelle nécessaire à l'insertion de l'unité de service (20, 30) dans le siège (5) lorsque l'unité de service est sur le point d'atteindre la position de collecte au cours de l'insertion manuelle.

3. La machine selon la revendication 2, dans laquelle le moyen de rétroaction par force comprend un agencement (40) pour générer une assistance de force d'insertion lorsque l'unité de service (20, 30) est sur le point d'atteindre la position de collecte, en particulier un agencement pour positionner automatiquement l'unité de service dans la position de collecte.

4. La machine selon la revendication 3, dans laquelle le moyen de rétroaction par force comprend un mécanisme basé sur un aimant (40) et/ou un mécanisme basé sur un ressort.

5. La machine selon l'une des revendications de 2 à 4, dans laquelle le moyen de rétroaction par force comprend un agencement pour générer un point dur mécanique avec une libération soudaine lorsque l'unité de service atteint la position de collecte.

6. La machine selon la revendication 5, dans laquelle l'agencement de point dur mécanique comprend un mécanisme à base de ressort et/ou à base de friction.

7. La machine selon l'une des revendications précédentes, dans laquelle l'unité de service (20, 30) est agencée de façon à pouvoir coulisser dans et hors du siège (5).

8. La machine selon l'une des revendications précédentes, dans laquelle l'unité de service (20, 30) comprend un agencement (21, 22, 32) pour collecter au moins un des éléments suivants :
- un élément, précédemment liquide, des déchets de boisson, comme de l'eau ;
- un élément, précédemment solide, des déchets de boisson, comme un ingrédient aromatisant de boisson qui a été utilisé, en particulier du café moulu, éventuellement un élément précédemment solide, pré-proportionné, contenu dans une capsule ; et
- des déchets de boisson, comme des gouttes issues d'une sortie de distribution de boisson (95) ou l'écoulement issu d'une chambre d'ingrédients d'une unité de traitement d'ingrédients lors de la réouverture après le traitement.

9. La machine selon la revendication 8, dans laquelle l'unité de service (20, 30) comprend un réceptacle de collecte de liquide (22) et un réceptacle de collecte d'ingrédients solides (32), en particulier un réceptacle pour capsules d'ingrédients usagées.

10. La machine selon la revendication 8 ou 9, dans laquelle l'unité de service (20, 30) comprend un support (21) pour les tasses et/ou les grandes tasses des utilisateurs, le support étant en particulier agencé pour évacuer des gouttes de boisson vers un réceptacle de collecte de liquide (22).

11. La machine selon l'une des revendications précédentes, qui comprend une unité de traitement d'ingrédients (13) qui a une chambre (14) et qui a : une configuration ouverte pour l'insertion dudit ingrédient dans la chambre et le retrait dudit ingrédient de la chambre ; et une configuration fermée pour préparer une boisson en traitant ledit ingrédient dans la chambre, l'unité de traitement ou une partie de celle-ci étant déplaçable, en particulier manuellement, de la configuration ouverte vers la configuration fermée et vice versa.

12. La machine selon l'une des revendications précédentes, qui comprend un dispositif de verrouillage mécanique (50) pour empêcher mécaniquement la préparation d'une boisson quand l'unité de service (20, 30) n'est pas dans la position de collecte.

13. La machine selon la réclamation 12 lorsqu'elle dépend de la réclamation 11, dans laquelle le dispositif de verrouillage mécanique (50) est configuré pour empêcher la fermeture de l'unité de traitement (13) quand l'unité de service (20, 30) n'est pas dans la position de collecte.

14. La machine selon la revendication 13, dans laquelle ladite unité de traitement ou ladite partie de celle-ci est déplaçable manuellement, ledit mécanisme de rétroaction sensorielle tactile (40, 50) comprenant le dispositif de verrouillage mécanique (50) empêche la fermeture manuelle de l'unité de traitement (13) quand l'unité de service (20, 30) n'est pas dans la position de collecte.

15. La machine selon l'une des revendications de 11 à 14, qui comprend un dispositif de verrouillage mécanique (50) configuré pour empêcher le retrait de l'unité de service (20, 30) quand l'unité de traitement (13) est dans sa configuration fermée, en particulier quand l'unité de traitement n'est pas dans la configuration ouverte.
